(19) Europäisches Patentamt
European Patent Office
Office européen des brevets

(11) Numéro de publication : **0 022 386**
**B1**

(12) **FASCICULE DE BREVET EUROPÉEN**

(45) Date de publication du fascicule du brevet :
11.05.83

(51) Int. Cl.³ : **C 08 F 10/02**, C 08 F 6/28

(21) Numéro de dépôt : **80400853.0**

(22) Date de dépôt : **13.06.80**

(54) Procédé de production de polymères de l'éthylène et appareil pour sa mise en œuvre.

(30) Priorité : 05.07.79 FR 7917444

(43) Date de publication de la demande :
14.01.81 Bulletin 81/02

(45) Mention de la délivrance du brevet :
11.05.83 Bulletin 83/19

(84) Etats contractants désignés :
AT BE CH DE GB IT LI LU NL SE

(56) Documents cités :
FR A 2 090 789
GB A 991 856
US A 3 627 746

RESEARCH DISCLOSURE, septembre 1976, no. 149,
pages 76-78 « Polymer recovery »

(73) Titulaire : **Société Chimique des Charbonnages**
**Tour Aurore Place des Reflets Cedex no 5**
**F-92080 Paris La Défense 2 (FR)**

(72) Inventeur : **Durand, Pierre**
**5, Bertaux Dumas**
**F-92200 Neuilly Sur Seine (FR)**
Inventeur : **Gloriod, Pierre**
**Cabriolet par Lillebonne**
**F-76170 Saint Nicolas de la Taille (FR)**

(74) Mandataire : **Dubost, Thierry et al**
**Société Chimique des Charbonnages Service Pro-**
**priété Industrielle B.P. No 1**
**F-62160 Bully Les Mines (FR)**

## Procédé de production de polymères de l'éthylène et appareil pour sa mise en œuvre

La présente invention concerne un procédé de production de polymères de l'éthylène et un appareil pour la mise en œuvre dudit procédé.

Il est connu depuis longtemps de polymériser l'éthylène sous haute pression (400 à 3 000 bars environ) au moyen soit d'un initiateur de radicaux libres comme dans le brevet américain n° 3 255 171, soit d'un système catalytique de type Ziegler comprenant un activateur organométallique et un halogénure de métal de transition comme dans le brevet français n° 2 202 897.

Dans les procédés de polymérisation de l'éthylène en continu, on sépare le polymère formé du mélange réactionnel dans une première zone de séparation maintenue sous une pression généralement comprise entre 100 et 500 bars, puis dans une seconde zone de séparation maintenue à une pression généralement aussi proche que possible de la pression atmosphérique : 2 atmosphères selon les exemples du brevet américain n° 3 551 397.

Dans les procédés connus de polymérisation évoqués ci-dessus, la fraction d'éthylène séparée dans la seconde zone de séparation — fraction assez importante puisqu'elle représente généralement de 20 à 50 % de la production de polymère — doit être envoyée à un surpresseur pour être comprimée jusqu'à la pression du flux d'alimentation en éthylène, être mélangée à ce flux et comprimée avec lui jusqu'à la pression de la première zone de séparation. L'ensemble est alors mélangé à la fraction d'éthylène séparée dans la première zone de séparation et comprimée avec elle jusqu'à la pression de fonctionnement du réacteur.

Le procédé de recyclage de l'éthylène rappelé ci-dessus présente deux inconvénients principaux. D'une part il est coûteux en énergie puisqu'il conduit à détendre et recomprimer immédiatement à la suite un flux d'éthylène gazeux (séparé dans la seconde zone de séparation) relativement important, le coût énergétique supplémentaire de cette opération étant d'autant plus élevé que la pression dans la seconde zone de séparation est plus basse. D'autre part il ne permet qu'un dégazage incomplet des polymères produits, d'où il résulte des inconvénients pour le stockage des polymères. En effet la présence de gaz résiduel dans les lieux de stockage se traduit par une odeur désagréable, par des risques d'explosion et par des contraintes pour le personnel chargé du stockage et de la manutention. L'évolution des normes en vigueur dans de nombreux pays en matière de toxicologie, d'hygiène et de sécurité, laisse prévoir que les procédés actuels ne seront bientôt plus conformes à ces normes parce qu'ils assurent un dégazage insuffisant des polymères produits.

On connaît d'autre part le brevet français n° 2.090.789 décrivant un procédé de polymérisation de l'éthylène sous une pression de 700 à 5 000 bars et à une température de 100 à 400 °C, caractérisé par la présence d'un ou plusieurs séparateurs à haute pression dont au moins un fonctionne à une pression de 500 à 1 000 bars ; selon la description de ce brevet, par « haute pression » on entend une pression au moins égale à 250 bars. Ce procédé présente, d'une manière accentuée par le niveau très élevé des pressions choisies, les mêmes deux inconvénients que les procédés évoqués ci-dessus.

Le but de la présente invention est donc de procurer une solution aux deux inconvénients précités des procédés connus de polymérisation.

L'idée retenue pour atteindre ce but consiste à introduire dans le procédé de séparation et de recyclage de l'éthylène une zone supplémentaire de séparation maintenue à une pression intermédiaire entre celle de la première zone de séparation et celle de la seconde zone de séparation. Malgré sa simplicité apparente, cette idée n'est pas aisée à mettre en pratique de façon industriellement efficace car la pression intermédiaire doit être choisie en fonction des trois objectifs en partie contradictoires et d'une contrainte physico-chimique sur laquelle on ne dispose d'aucun moyen d'action. Les trois objectifs sont d'une part, comme indiqué précédemment, la diminution de la consommation d'énergie du procédé et la réduction des inconvénients de stockage du polymère, et d'autre part le maintien de la qualité de la production de polymère mesurée par les propriétés physiques et mécaniques de celui-ci. Or on a observé que l'introduction d'une zone supplémentaire de séparation maintenue à une pression intermédiaire permet la diminution de la consommation d'énergie et la réduction d'odeur du polymère stocké tandis que le maintien du polymère dans une zone de séparation à pression élevée a tendance à dégrader les propriétés du polymère et, par conséquent, la qualité de la production. La contrainte physico-chimique sur laquelle on ne dispose d'aucun moyen d'action est constituée par la variation en fonction de la pression de la solubilité des oligomères, huiles et impuretés dans l'éthylène, laquelle présente un point singulier pour une pression de 15 bars environ.

La présente invention consiste donc en le choix d'un moyen industriellement efficace pour réaliser l'introduction d'une zone supplémentaire de séparation, c'est-à-dire plus particulièrement le choix de la pression intermédiaire et de la pression de la seconde zone de séparation pour assurer un bon compromis entre les trois objectifs précités compte tenu des contraintes physico-chimiques. Le procédé selon l'invention est un procédé de production de polymères d'éthylène dans un système fonctionnant en continu, sous une pression comprise entre 400 et 3 000 bars, à une température comprise entre 150° et 320 °C, comprenant une première étape de séparation des polymères formés d'avec le mélange réactionnel dans une première zone de séparation maintenue sous une pression comprise entre 100 et 500 bars, puis une seconde étape de séparation des polymères précédemment séparés d'avec les gaz résiduels dans une seconde zone de séparation maintenue sous une pression comprise entre 1 et 1,5 bar, caractérisé en ce qu'il comprend en outre une étape intermédiaire de séparation des gaz résiduels d'avec les polymères séparés dans la première étape, ladite étape intermédiaire de séparation étant réalisée dans une zone intermédiaire de séparation maintenue sous une pression de 10 à 70 bars, les polymères séparés dans cette zone intermédiaire étant ensuite acheminés vers la seconde zone de séparation, tandis que les gaz résiduels séparés dans cette zone intermédiaire sont mélangés, le cas échéant après compression, au flux d'alimentation en éthylène et comprimés avec lui jusqu'à la pression de la première zone de séparation. Comme dans les procédés connus, l'ensemble est alors mélangé avec l'éthylène séparé dans la première zone de séparation et comprimé avec lui jusqu'à la pression de fonctionnement du procédé.

Par polymères d'éthylène au sens de la présente invention, on entend aussi bien les homopolymères de l'éthylène que les copolymères de l'éthylène et de comonomères tels que des alpha-oléfines (propylène, butène-1, méthyl-4 pentène-1, hexène-1, octène-1, etc...) ou des monomères polaires (anhydride maléique, acétate de vinyle, acrylate d'éthyle, etc...). Il est entendu que les conditions de polymérisation ne constituent pas une partie distinctive de la présente invention et que les conditions proposées (pression comprise entre 400 et 3 000 bars, température comprise entre 150° et 320 °C) constituent seulement les conditions les plus usuelles en pratique. Des conditions de polymérisation s'écartant un peu de celles proposées, telles que notamment une pression supérieure à 3 000 bars et/ou une température supérieure à 320 °C (en particulier dans un réacteur tubulaire), ne sauraient donc suffire à sortir du cadre de la présente invention. Par contre le choix de conditions de pression nettement différenciées dans la seconde étape de séparation d'une part et dans l'étape supplémentaire de séparation d'autre part constitue le trait caractéristique de la présente invention. Pour ce qui concerne la pression dans la première étape de séparation, elle ne constitue pas davantage une partie distinctive de l'invention et l'homme de l'art sait comment la choisir en fonction de la pression de polymérisation. Il est entendu également que la présente invention est applicable à la polymérisation aussi bien au moyen d'un initiateur de radicaux libres (oxygène, peroxyde, perester) qu'au moyen d'un système catalytique de type Ziegler comprenant un activateur organométallique et un halogénure de métal de transition. L'invention ayant trait seulement à un procédé spécifique de séparation et de recyclage de l'éthylène, il est entendu que tout moyen d'action sur le cours de la polymérisation ou tout moyen de contrôle de celle-ci, tel que par exemple l'introduction d'inhibiteurs ou d'agents régulateurs ou d'agents complexants à un stade quelconque du procédé, qui était ou pouvait être utilisé dans le cadre des procédés connus, pourra être utilisé dans le cadre du procédé selon l'invention avec une facilité et une souplesse accrues puisqu'on disposera d'une zone supplémentaire pour agir sur la polymérisation ou la contrôler. A titre d'exemples supplémentaires de tels moyens d'action, on peut citer les procédés de refroidissement de la première zone de séparation décrits dans les brevets français n° 2.313.399, ainsi que le procédé de désactivation de catalyseur décrit dans le brevet français n° 2 302 305.

Les résultats que la présente invention permet d'atteindre sont conformes aux objectifs fixés. D'une part la qualité de la production, c'est-à-dire les propriétés physiques et mécaniques du polymère, est maintenue à un niveau identique à celui de la production réalisée selon les procédés connus. D'autre part on observe une forte réduction de l'odeur des polymères stockés, due à un dégazage à peu près complet de ceux-ci, à tel point qu'elle supprime les désagréments causés au personnel chargé du stockage et qu'elle supprime en grande partie la nécessité de moyens de ventilation dans les lieux de stockage. Enfin on observe une diminution de la consommation d'énergie du procédé, variable en fonction de nombreux paramètres mais qui est généralement de l'ordre de 50 KWh par tonne de polymère. Cette diminution de la consommation d'énergie s'accompagne également d'une diminution de l'investissement pour la production du polymère, du fait que l'on supprime le surpresseur chargé de comprimer l'éthylène séparé dans la seconde zone de séparation jusqu'à la pression du flux d'alimentation en éthylène.

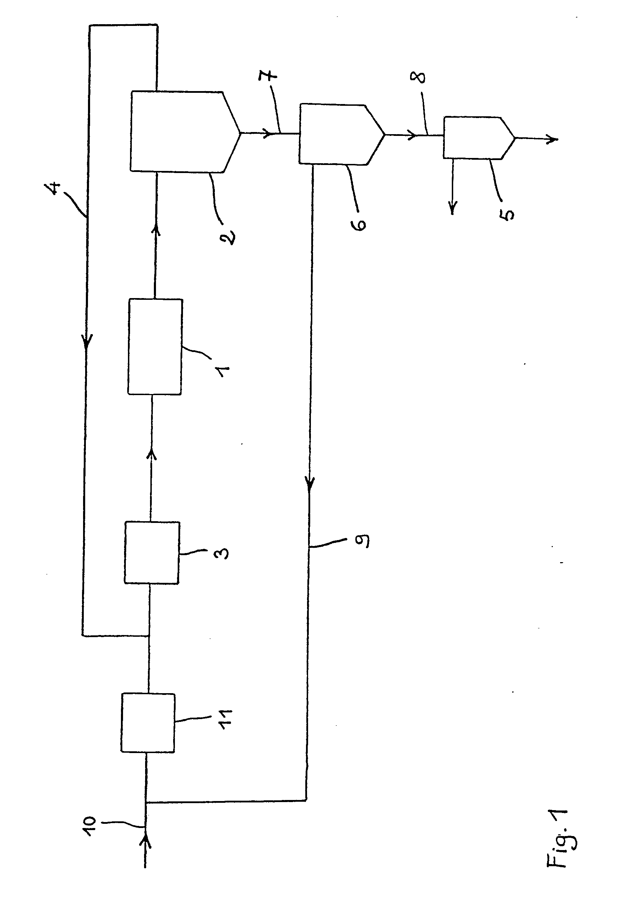

La présente invention se rapporte également à un appareil pour la mise en œuvre du procédé décrit ci-dessus. Cet appareil représenté sur la figure unique en annexe comprend :

a) un réacteur de polymérisation 1,

b) une première zone de séparation 2 dont l'entrée est raccordée à la sortie du réacteur 1,

c) un hypercompresseur 3 dont la sortie est raccordée à l'entrée du réacteur 1,

d) un conduit de gaz 4 s'étendant de la sortie de la première zone de séparation 2 jusqu'à l'entrée de l'hypercompresseur 3, et

e) une seconde zone de séparation 5 dont l'entrée est raccordée à la sortie de la première zone de séparation 2.

Conformément à la caractéristique de l'invention, cet appareil comprend en outre :

f) une zone intermédiaire de séparation 6 située entre la première zone 2 et la seconde zone 5 de séparation, dont l'entrée est raccordée à la sortie de la première zone de séparation 2 par un conduit de polymère 7 et dont la sortie est raccordée à l'entrée de la seconde zone de séparation 5 par un conduit de polymère 8, et

g) un conduit de gaz 9 s'étendant de la sortie de la zone intermédiaire de séparation 6 jusqu'à un conduit d'alimentation 10 du réacteur, ce dernier conduit étant raccordé à l'entrée de l'hypercompresseur 3.

L'appareil selon l'invention peut encore comprendre un compresseur 11 interposé sur le conduit d'alimentation 10 du réacteur entre le point de raccord du conduit de gaz 9 provenant de la zone intermédiaire de séparation 6 et l'entrée de l'hypercompresseur 3 ou le point de raccord du conduit de gaz 4 provenant de la première zone de séparation 2. Comme suggéré plus haut, l'appareil selon l'invention peut encore comprendre des moyens de refroidissement de la première zone de séparation 2, tels qu'un injecteur selon le brevet français n° 2.313.399 ou bien une turbine.

**Revendications**

1. Procédé de production de polymères d'éthylène dans un système fonctionnant en continu, sous une pression comprise entre 400 et 3 000 bars, à une température comprise entre 150° et 320 °C, comprenant une première étape de séparation des polymères formés d'avec le mélange réactionnel dans une première zone de séparation maintenue sous une pression comprise entre 100 et 500 bars, puis une seconde étape de séparation des polymères précédemment séparés d'avec les gaz résiduels dans une seconde zone de séparation maintenue sous une pression comprise entre 1 et 1,5 bar, caractérisé en ce qu'il comprend en outre une étape intermédiaire de séparation des gaz résiduels d'avec les polymères séparés dans la première étape, ladite étape intermédiaire de séparation étant réalisée dans une zone intermédiaire de séparation maintenue sous une pression de 10 à 70 bars, les polymères séparés dans cette zone intermédiaire étant ensuite acheminés vers la seconde zone de séparation, tandis que les gaz résiduels séparés dans cette zone intermédiaire sont mélangés au flux d'alimentation en éthylène et comprimés avec lui jusqu'à la pression de la première zone de séparation, et que l'ensemble est alors mélangé avec les gaz résiduels séparés dans la première zone de séparation et comprimé avec lui jusqu'à la pression du réacteur puis alimenté à celui-ci.

2. Appareil pour la mise en œuvre du procédé selon la revendication 1, comprenant :

a) un réacteur de polymérisation 1,

b) une première zone de séparation 2 dont l'entrée est raccordée à la sortie du réacteur 1,

c) un hypercompresseur 3 dont la sortie est raccordée à l'entrée du réacteur 1,

d) un conduit de gaz 4 s'étendant de la sortie de la première zone de séparation 2 jusqu'à l'entrée de l'hypercompresseur 3, et

e) une seconde zone de séparation 5 dont l'entrée est raccordée à la sortie de la première zone de séparation 2, caractérisé en ce qu'il comprend en outre :

f) une zone intermédiaire de séparation 6 située entre la première zone 2 et la seconde zone 5 de séparation, dont l'entrée est raccordée à la sortie de la première zone de séparation 2 par un conduit de polymère 7 et dont la sortie est raccordée à l'entrée de la seconde zone de séparation 5 par un conduit de polymère 8, et

g) un conduit de gaz 9 s'étendant de la sortie de la zone intermédiaire de séparation 6 jusqu'à un conduit d'alimentation 10 du réacteur, ce dernier conduit étant raccordé à l'entrée de l'hypercompresseur 3.

3. Appareil selon la revendication 2, caractérisé en ce qu'il comprend en outre des moyens de refroidissement de la première zone de séparation.

**Claims**

1. Process for the production of polymers of ethylene in a continuously operating system under a pressure between 400 and 3 000 bars and a temperature between 150 and 320 °C, comprising a first step of separating the polymers formed from the reaction mixture in a first separation zone maintained at a pressure between 100 and 500 bars, and a second step of separating the polymers previously separated from the residual gases in a second separation zone maintained at a pressure between 1 and 1.5 bars, characterized in that it further comprises an intermediate step of separating the residual gases from the polymers separated in the first step, the said intermediate step being effected in an intermediate separation zone maintained under a pressure of 10 to 70 bars, the polymers separated in the said intermediate zone being then led to the second separation zone, whereas the residual gases separated in the said intermediate zone are mixed with the ethylene feed stream and compressed together up to the pressure of the first separation zone and whereas the whole is then mixed with the residual gases separated in the first separation zone and compressed together up to the reactor pressure and fed to said reactor.

2. Apparatus for operating the process according to claim 1, comprising :

a) a polymerization reactor 1,

b) a first separation zone 2, whose inlet is connected to the outlet of reactor 1,

c) a hypercompressor 3, whose outlet is connected to the inlet of reactor 1,

d) a gas conduit 4, extending from an outlet of the first separation zone 2 to the inlet of the hypercompressor 3, and

e) a second separation zone 5, whose inlet is connected to an outlet of the first separation zone 2, characterized in that it further comprises :

f) an intermediate separation zone 6 located between the first zone 2 and the second separation zone 5, whose inlet is connected to the outlet of the first separation zone 2 by a polymer conduit 7 and whose outlet is connected to an inlet of the second separation zone 5 by a polymer conduit 8, and

g) a gas conduit 9 extending from an outlet of the intermediate separation zone 6 to a feed conduit 10 of the reactor, the latter conduit being connected to the inlet of the hypercompressor 3.

3. Apparatus according to claim 2, further comprising a means for cooling the first separation zone.

## Ansprüche

1. Verfahren zur Herstellung von Äthylenpolymeren in einem kontinuierlich arbeitenden System, unter einem Druck zwischen etwa 400 und 3 000 bar und bei einer Temperatur zwischen 150° und 320 °C, mit einer ersten Stufe zur Trennung gebildeter Polymere von der Reaktionsmischung in einer unter einem Druck zwischen 100 und 500 bar gehaltenen ersten Trennzone, danach einer zweiten Stufe zur Trennung der vorher abgetrennten Polymere von den Restgasen in einer unter einem Druck zwischen 1 und 1,5 bar gehaltenen zweiten Trennzone, dadurch gekennzeichnet, daß es darüberhinaus eine Zwischenstufe zur Trennung der Restgase von den in der ersten Stufe abgetrennten Polymeren umfaßt, wobei die Zwischentrennstufe in einer unter einem Druck zwischen 10 und 70 bar gehaltenen Zwischentrennzone durchgeführt wird und die in dieser Zwischenzone abgetrennten Polymere anschließend zur zweiten Trennzone geführt werden, während die in dieser Zwischenzone abgetrennten Restgase dem Äthylen-Speisestrom zugemischt und mit diesem bis auf den Druck der ersten Trennzone komprimiert werden, und daß die in der ersten Trennzone abgetrennten Restgase bis auf den Druck des Reaktors komprimiert und in letzteren eingespeist werden.

2. Vorrichtung zur Durchführung des Verfahrens nach Anspruch 1, mit

a) einem Polymerisationsreaktor (1),

b) einer ersten Trennzone (2), deren Eingang an den Ausgang des Reaktors (1) angeschlossen ist,

c) einem Hyperkompressor (3), dessen Ausgang an den Eingang des Reaktors (1) angeschlossen ist,

d) einer vom Ausgang der ersten Trennzone (2) bis zum Eingang des Hyperkompressors (3) führenden Gasleitung (4), und

e) einer zweiten Trennzone (5), deren Eingang an den Ausgang der ersten Trennzone (2) angeschlossen ist, dadurch gekennzeichnet, daß sie weiters umfaßt:

f) eine zwischen der ersten Trennzone (2) und der zweiten Trennzone (5) liegende Zwischentrennzone (6), deren Eingang über eine Polymerleitung (7) an den Ausgang der ersten Trennzone (2) angeschlossen ist und deren Ausgang über eine Polymerleitung (8) mit dem Eingang der zweiten Trennzone (5) verbunden ist, und

g) eine Gasleitung (9), die vom Ausgang der Zwischentrennzone (6) bis zu einer Speiseleitung (10) des Reaktors führt, welch letztere an den Eingang des Hyperkompressors (3) angeschlossen ist.

3. Vorrichtung nach Anspruch 2, dadurch gekennzeichnet, daß sie weiters Mittel zur Kühlung der ersten Trennzone enthält.

Fig. 1

0 022 386